Europäisches Patentamt

(19) European Patent Office

Office européen des brevets

(11) Publication number: **0 096 553**
**B1**

(12) **EUROPEAN PATENT SPECIFICATION**

(45) Date of publication of patent specification: **30.12.86**

(21) Application number: **83303209.7**

(22) Date of filing: **03.06.83**

(51) Int. Cl.⁴: **F 16 D 65/12,** F 16 D 65/847, B 60 T 1/06

(54) Disc assemblies for brakes.

(30) Priority: **03.06.82 GB 8216221**

(43) Date of publication of application:
**21.12.83 Bulletin 83/51**

(45) Publication of the grant of the patent:
**30.12.86 Bulletin 86/52**

(84) Designated Contracting States:
**DE FR IT**

(56) References cited:
**DE-A-1 800 161**
**DE-A-2 043 911**
**FR-A-1 152 328**
**FR-A-2 056 625**
**FR-A-2 118 815**
**FR-A-2 266 052**
**FR-A-2 418 385**
**GB-A- 983 548**

(73) Proprietor: **LUCAS INDUSTRIES public limited company**
**Great King Street**
**Birmingham, B19 2XF West Midlands (GB)** ·

(72) Inventor: **Ottewell, Gerald Allan**
**16 Newfield Close**
**Solihull West Midlands B91 2SH (GB)**

(74) Representative: **Spall, Christopher John et al**
**BARKER, BRETTELL & DUNCAN**
**138 Hagley Road**
**Edgbaston Birmingham B16 9PW (GB)**

Courier Press, Leamington Spa, England.

## Description

This invention relates to disc assemblies for brakes of the kind comprising a substantially annular rotatable disc member adapted to be braked, the disc member being mounted on a rotatable hub, and coupling means providing a driving engagement between the disc member and the hub so that they rotate together.

A problem with such disc assemblies is that drive is lost if the coupling means fails. A solution to this problem is shown in FR—A—1 152 328, from which the features of the precharacterising part of claim 1 are known and in which opposed faces of the disc member and the hub are of complementary undulating outline, and are coupled by an undulating resilient metal band located in a groove in the disc member. If the band fails a driving engagement is provided between the disc member and the hub. However, this arrangement has the disadvantage that it is difficult and expensive to manufacture.

According to the invention, in an assembly of the kind set forth where opposed faces of the disc member and the hub are of complementary non-circular outline such that on failure of the coupling means a driving engagement is provided between the disc member and the hub, the opposed faces are polygonal in outline, and the coupling means comprises spring roll-pins located in conjoined recesses in the opposed faces of the disc member_ and the hub, at the vertices of the polygon.

This construction is much easier and cheaper to manufacture, as the disc member and the hub can be made from a single casting in which the recesses are formed, slots then being made between adjacent recesses to form the two components.

In one construction the opposed faces are octagonal in outline. Clearly, the faces may be of hexagonal, or indeed any other convenient polygonal outline.

The disc assembly is conveniently incorporated in a transmission brake, with the disc member braked by friction pads actuated by any suitable actuating means.

An embodiment of the invention will now be described, by way of example, with reference to the accompanying drawings in which:—

Figure 1 is a side view, partly in section, of a transmission disc brake incorporating a disc assembly according to our invention; and

Figure 2 shows the brake as viewed from the left in Figure 1.

The transmission disc brake shown in the drawings has a disc assembly 1, which comprises a substantially annular rotatable disc member 2 mounted on a rotatable hub 3 which forms part of a vehicle transmission. Coupling means 4 provide a driving engagement between the disc member 2 and the hub 3 so that they rotate together.

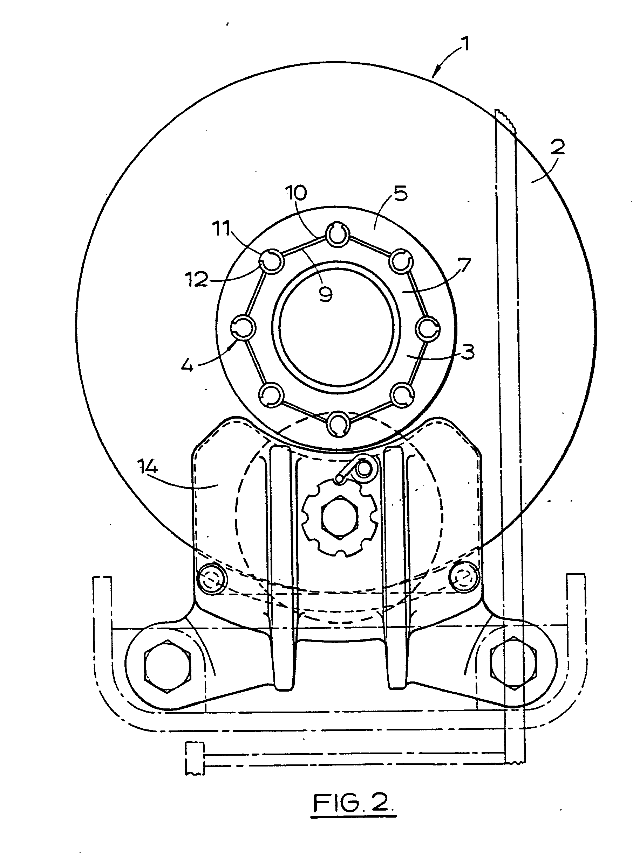

The disc member 2 has a flange 5 extending radially inwardly, by which the disc member 2 is coupled to the hub 3. The hub 3 is formed in three axial parts, 6, 7 and 8, and, as shown in Figure 2, the outer peripheral face 9 of the intermediate part 7 is of octagonal outline. The inner peripheral face 10 of the flange 5, is also of octagonal outline and surrounds the intermediate hub part 7 so that the faces 9, 10 are opposed. A small clearance is provided between the faces 9, 10. The flange 5 and hub part 7 are provided with eight conjoined part-cylindrical axial recesses 11, located at the vertices of the octagonal shape, and each recess 11 receives a spring roll-pin 12. These pins 12 form the coupling means 4, and are under radial compression to centre the disc member 2 on the hub 3 and accommodate thermal expansion of the disc member.

The disc member 2 and hub part 7 are conveniently manufactured as a single casting, in which the recesses 11 are drilled, slots then being made between the recesses 11 to form the two components which are therefore supplied in matched pairs.

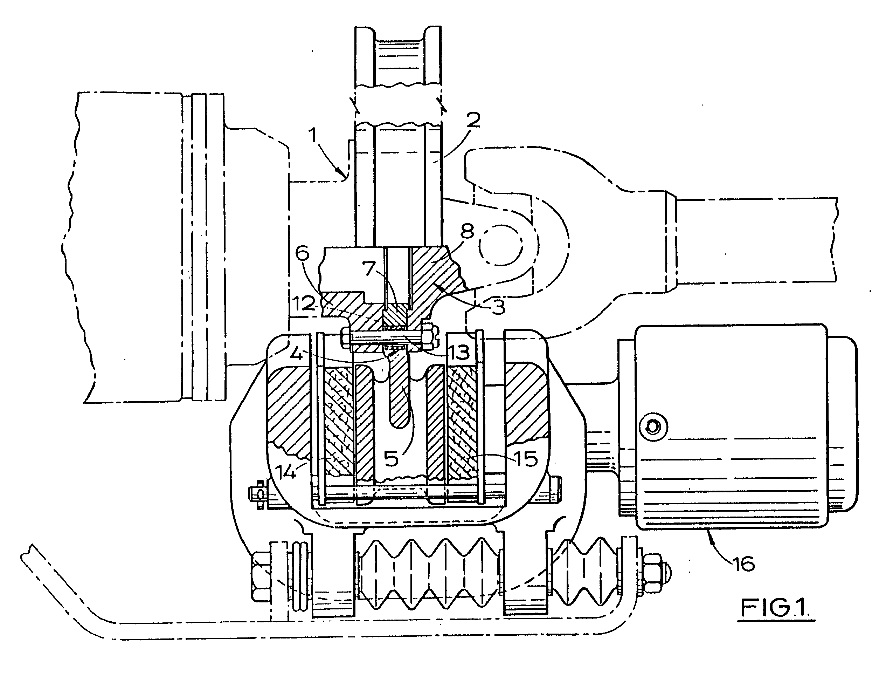

Returning to Figure 1, the two end hub parts 6 and 8 extend radially outwards beyond the intermediate part 7 to receive bolts 13 which are inserted through the roll-pins 12 to clamp the hub parts securely together.

Brake pads 14 and 15 are located on axially opposite sides of the disc member 2 for operation by actuator means 16, in this case a convential mechanism of the type in which the brake is held inoperative by hydraulic pressure acting against an actuating spring.

In use, the pins 12 couple the disc member 2 to the hub 3, providing a driving engagement.

If the spring pins 12 should fail the opposed faces 9, 10 of the flange 5 and the hub part 7 will come into engagement, and provide a driving engagement between the disc member 2 and the hub 3.

Another possible advantage of the described arrangement is that during normal heavy braking the faces 9, 10 could come into engagement after a small angular movement, to relieve the spring pins 12 and bolts 13 of excessive stress.

The opposed faces 9, 10 of the disc member and the hub could be hexagonal or of other non-circular shapes arranged to provide the necessary driving engagement.

## Claims

1. A disc assembly for a brake of the kind comprising a substantially annular rotatable disc member (2) adapted to be braked, the disc member (2) being mounted on a rotatable hub (3), and coupling means (4) providing a driving engagement between the disc member (2) and the hub (3) so that they rotate together, opposed faces (9, 10) of the disc member (2) and the hub (3) being of complementary non-circular outline, such that on failure of the coupling means (4) a driving engagement is provided between the disc member (2) and the hub (3), characterised in that the opposed faces (9, 10) are polygonal in outline, with the coupling means (4) comprising spring roll-pins (12) located in conjoined recesses (11) in the opposed faces (9, 10) of the disc member (2) and the hub (3) at the vertices of the polygon.

2. A disc assembly according to claim 1, characterised in that the opposed faces (9, 10) are octagonal in outline.

3. A disc assembly according to claim 1 or claim 2, characterised in that it is incorporated in a transmission brake, with the disc member (2) braked by friction pads (14, 15) actuated by actuating means (16).

**Revendications**

1. Ensemble à disque pour frein du type comportant un élément substantiellement annulaire (2) formant disque tournant prévu pour être freiné, l'élément formant disque (2) étant monté sur un moyeu tournant (3), et comportant aussi un moyen d'accouplement (4) qui assure une prise entre l'élément formant disque (2) et le moyeu (3) pour entrainement, de sorte qu'ils tournent ensemble, les faces opposées (9, 10) de l'élément formant disque (2) et du moyeu (3) présentant un contour complémentaire non circulaire de sorte qu'en cas de défaillance du moyen d'accouplement (4), une prise pour entrainement se produit entre l'élément formant disque (2) et le moyeu (3), caractérisé en ce que les faces opposées (9, 10) ont un contour polygonal, le moyen d'accouplement (4) comportant des goupilles en fil enroulé en hélice (12) logées dans des logements conjoints (11) dans les faces opposées (9, 10) de l'élément formant disque (2) et du moyeu (3) aux sommets du polygone.

2. Ensemble à disque selon la revendication 1, caractérisé en ce que les faces opposées (9, 10) ont un contour octogonal.

3. Ensemble à disque selon la revendication 1 ou la revendication 2, caractérisé en ce qu'il est incorporé dans un frein sur la transmission, l'élément formant disque (2) étant freiné par des patins de friction (14, 15) manoeuvrés par un moyen de manoeuvre (16).

**Patentansprüche**

1. Scheibenzusammensetzung für Bremsen, die ein zu bremsendes im wesentlichen ringförmiges drehbares Scheibenelement (2), das auf einer drehbaren Nabe (3) angebracht ist, und eine Kupplungseinrichtung (4) aufweist, welche einen Antriebskontakt zwischen dem Scheibenelement (2) und der Nabe (3) herstellt, so daß diese sich zusammen drehen, wobei einander gegenüberliegende Flächen (9, 10) des Scheibenelementes (2) und der Nabe (3) eine komplimentäre nicht kreisförmige Kontur aufweisen, so daß bei Ausfall der Kupplungseinrichtung (4) ein treibender Kontakt zwischen dem Scheibenglied (2) und der Nabe (3) hergestellt wird, dadurch gekennzeichnet, daß die einander gegenüberliegenden Flächen (9, 10) eine polygonale Kontur haben, wobei die Kupplungseinrichtung (4) federnde Rollstifte (12) aufweist, die in zusammentreffenden Ausnehmungen (11) in den einander gegenüberliegenden Flächen (9, 10) des Scheibenelementes (2) und der Nabe (3) an den Ecken des Polygons vorgesehen sind.

2. Scheibenzusammensetzung nach Anspruch 1, dadurch gekennzeichnet, daß die einander gegenüberliegenden Flächen (9, 10) eine achteckige Kontur aufweisen.

3. Scheibenzusammensetzung nach Anspruch 1 oder 2, dadurch gekennzeichnet, daß sie in einer Transmissionsbremse angeordnet ist, wobei das Scheibenelement (2) von Reibungsbacken (14, 15) gebremst wird, die von einer Betätigungseinrichtung (16) betätigt werden.

FIG.1.

0 096 553

0 096 553

FIG. 2.

2